# EUROPEAN PATENT SPECIFICATION

(11) **EP 0 647 014 B1**
(45) Date of publication and mention of the grant of the patent: **24.11.1999**
(21) Application number: 94115159.9
(22) Date of filing: 27.09.1994
(51) Int. Cl.: H02P 6/18

(54) **A method and a system for controlling a brushless electric motor**
Verfahren und System zur Regelung eines bürstenlosen elektrischen Motors
Méthode et système pour commander un moteur électrique sans balais

(30) Priority: 30.09.1993 IT TO930715
(43) Date of publication of application: 05.04.1995
(73) Proprietor: Gate S.p.A., 10123 Torino (IT)
(72) Inventor: Acquaviva, Sebastiano, I-10025 Pino Torinese, Torino (IT)
(74) Representative: Quinterno, Giuseppe

(56) References cited:
- EP-A- 0 481 933
- GB-A- 2 251 989
- US-A- 5 130 620
- PATENT ABSTRACTS OF JAPAN vol. 12, no. 281 (E-641) (3128) 2 August 1988 & JP-A-63 059 785 (SANYO ELECTRIC CO LTD) 15 March 1988

## Description

The present invention relates to a method and a device for detecting the angular position of a permanent magnet inductor relative to an armature of the kind defined in the preamble of Claim 1 and Claim 9, respectively.

The invention is applicable to devices which detect the angular position of the rotor of electric brushless motors.

Brushless motors are synchronous machines. Information concerning the position of the rotor is necessary for correct operation and control-of motors of this type. Typically, Hall-effect sensors are used to detect the angular positions of the rotor in which the current is to be switched in the phases or windings of the motor.

Alternatively, in the absence of position sensors, the angular position of the rotor can be determined by detecting and analysing the electromotive forces induced in the phases of the motor. This enables the correct switching points or moments of the current in the phases to be determined.

In this way, according to the prior art, switching can be achieved without position sensors. However, in the control systems according to the prior art, the information concerning the angular position of the rotor, in motors of the type without sensors, is imprecise such that the switching moments are not determined in an optimum manner. This constitutes a technical problem since the control and performance of the motor is impaired.

Furthermore, according to the known processes, switching is brought about at fixed angles of the rotor independently of the speed of the rotor and the moment when the current is prohibited in one phase corresponds to the beginning of the conduction of current in another phase.

These aspects of the control of brushless motors are still not optimum. In fact, brushless motors controlled in this way have the following technical disadvantages.

In the motor a current waveform is generated which causes a variation of the output torque. Brushless motors also produce electromagnetic interference.

US-A-5 130 620 discloses a method and a device of the above-mentioned kind for detecting the angular position of the rotor of a brushless motor. According to this prior art the zero-crossing points of the counter electromotive forces induced in the stator windings are converted into a pulse train. The period of that pulse train is digitally measured by means of a first counter and a signal indicative of the rotor position is generated in response to the thus measured period. Thus, the content of the first counter, which constitutes a control signal indicating the position of the rotor is a saw-toothed digital signal, with a variable peak-to-peak amplitude, depending on the rotational speed of the motor, and constant slope. The content of the first counter is loaded into a second counter and the latter is then decremented according to a clock rate which assumes a predetermined high rate value when the motor speed is lower than a present value, and a lower rate value when the motor runs at higher speed. Actuation signals for controlling the currents in the stator windings are generated when the content of the second counter becomes equal to zero.

The object of the present invention is to provide a method and a device which enable the angular position to be determined accurately and to overcome all the aforementioned problems satisfactorily.

In accordance with the present invention, this object is achieved by virtue of a method and a device having the features defined in claim 1 and in claim 9, respectively.

Further advantages and characteristics of the present invention will become clear from the following detailed description, given with the assistance of the attached drawings provided by way of non-limiting example, in which:
- Figure 1 is a schematic representation of a brushless motor associated with a control system;
- Figure 2 is a schematic block diagram of a control system according to the present invention; and
- Figure 3 is a schematic representation of the development of signals of the system operating according to the process of the present invention.

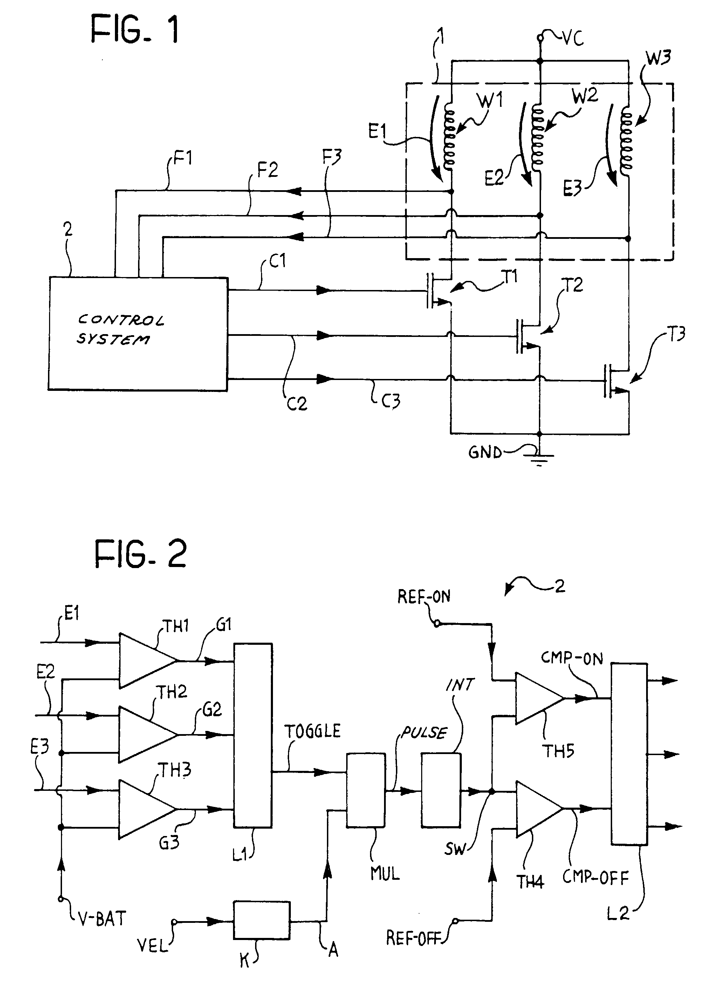

With reference to Figure 1, a typical brushless motor 1 comprises a rotor (not shown) and a stator comprising a plurality of windings or phases W1, W2, W3. The drawing shows a motor with three phases W1, W2, W3, however it is evident that the subject of the invention is general and comprises devices with any number of phases and with any arrangement of the control circuit (unipolar, bipolar or the like). The phases form part of circuit branches inserted between the two terminals Vc and GND of a constant voltage source. In addition to the respective phases, these circuit branches comprise (at least) one switching element typically a MOSFET-type transistor, designated T1, T2, T3, which can render the circuit branch in which it is inserted conductive or non-conductive.

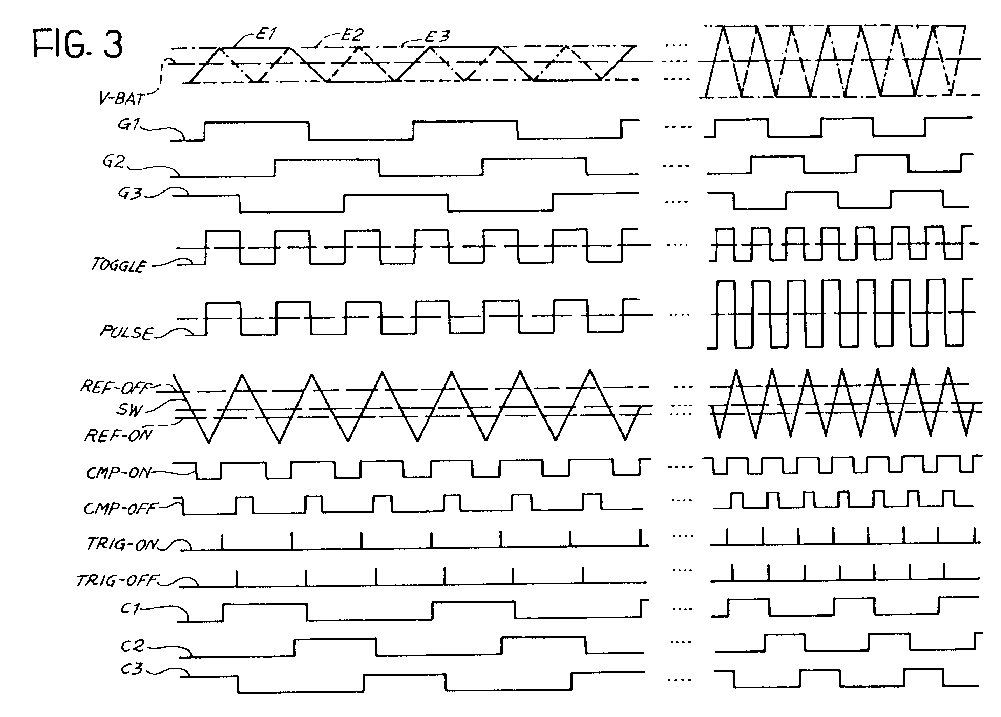

In operation, the transistors T1, T2, T3 are controlled by a control system 2. For correct operation, the control system 2 requires information concerning the position of the rotor. This information can be provided by position sensors or, as in the case described, by the electromotive forces induced in the phases W1, W2, W3. In fact, during the operation of the motor 1, signals E1, E2, E3 can be detected (Figure 3) in the phases W1, W2, W3 which indicate the electromotive forces induced in the phases themselves. The control system 2 detects these signals E1, E2, E3 by means of connections F1, F2, F3 between the phases W1, W2, W3 and the transistors T1, T2, T3.

The control system 2 will now be described with reference to the block diagram of Figure 2 and to the representation of the signals of Figure 3.

The control system 2 comprises three comparators TH1, TH2, TH3, one for each phase W1, W2, W3, the function of which is to compare the signals E1, E2, E3, present on the connections F1, F2, F3, with a predetermined reference value V-BAT advantageously corresponding to the passages through zero of the electromotive forces induced. The result of the comparison is provided by three logic signals G1, G2, G3 provided at the output of the comparators.

All the signals described hitherto, that is E1, E2, E3, G1, G2, G3 and V-BAT, are shown in Figure 3 as functions of the time. The righthand part of Figure 3 shows the above signals for double the speed of rotation of the rotor with respect to the related signals shown in the lefthand part of the drawings. All of the signals which will be described below are also shown in a similar manner in Figure 3.

The three logic signals G1, G2, G3 are supplied to the input of a combining logic circuit L1. At the output, the logic circuit L1 generates a first synchronisation logic signal TOGGLE on the basis of the signals G1, G2, G3. The signal TOGGLE has a value +1 when at least two of the signals G1, G2, G3 have high logic value otherwise it has a value -1.

Alternatively, the signal TOGGLE can be generated by adding the signals E1, E2, E3 and comparing the resultant signal with a reference value using a comparator, thus obtaining a square wave signal corresponding to the signal TOGGLE.

Connected to the output of the logic circuit L1 is a multiplier circuit MUL. The function of the multiplier circuit MUL is to multiply the signal TOGGLE coming from the circuit L1 by a scale factor A. A second synchronisation signal PULSE which has the same frequency and same development as the logic signal TOGGLE but has amplitude values of +A and -A instead of +1 and -1 is thus available at the output of the multiplier circuit MUL.

A processing circuit K generates the scale factor A which evidently constitutes the second input of the multiplier circuit MUL from a signal VEL indicating the speed of the rotor. The signal VEL can be generated in known manner, for example, using the signal TOGGLE.

Alternatively, according to an embodiment which is currently considered preferable, the signal VEL can be generated from a signal proportional to the upper envelope of the signals E1, E2, E3 indicating the electromotive forces induced.

The frequency of the second synchronisation signal PULSE, identical to that of the signal TOGGLE, is equal to 3 x p x f (where p is the number of pairs of poles of the motor 1 and f is the frequency of rotation of the rotor) for a 50% duty-cycle. The circuits K and MUL also operate such that the signal PULSE generated has a mean value of zero, over a cycle, and that over a half-cycle, the value of the area or integral constantly varies with the rotational speed of the rotor.

Connected to the output of the circuit MUL is an integrator INT having the function of integrating the signal PULSE. Given the characteristics of the signal PULSE, described above, the control signal produced by the integrator INT is a triangular wave signal having a frequency identical to that of the signal PULSE and constant peak-to-peak amplitude. This control signal is designated SW. The instantaneous amplitude of the signal SW is also indicative of the position of the rotor.

The remaining portion of the control system 2 uses the frequency and position information contained in the signal SW in order to control the transistors T1, T2, T3. The remaining portion of the control system comprises two comparators TH4 and TH5 intended to compare the control signal SW with two variable reference signals REF-ON and REF-OFF and a logic circuit L2.

The two comparators TH4 and TH5 generate two further synchronisation logic signals CMP-ON and CMP-OFF respectively. A second logic circuit L2 is connected to the outputs of the two comparators TH4 and TH5 and comprises three outputs connected to the control terminals of the transistors T1, T2, T3. The task of the circuit L2 is in fact to generate the actuation signals C1, C2, C3 from the synchronisation logic signals CMP-ON and CMP-OFF in order to control the conduction and prohibition of the transistors T1, T2, T3.

For this purpose, the logic circuit L2 generates two pulsed synchronisation signals TRIG-ON and TRIG-OFF having the characteristic of comprising a positive pulse in correspondence with the rising fronts of the signal CMP-ON and CMP-OFF respectively. The logic circuit L2 then uses the signals CMP-ON and CMP-OFF as well as the signals G1, G2, G3 available within the control system 2 even if the relative connections at the input of the logic circuit L2 are not shown, for generating the above actuation signals C1, C2, C3 in known manner. These signals have rising fronts and trailing fronts in correspondence with the pulses of the pulse synchronisation signals TRIG-ON and TRIG-OFF.

The manner in which the control system 2 can vary the switching moment, to open and/or to close the transistors T1, T2, T3, thus optimising the control of the motor 1 as a function of one or more predetermined parameters, for example the speed, the current etc, by varying the reference signals REF-ON and REF-OFF can thus be noted.

A number of important advantages can be achieved using the system and/or the method according to the present invention. It is possible to render one phase conductive before the conduction period of the preceding phase finishes so that, for a brief period of time during switching, the current passes simultaneously through two phases. If controlled in a suitable manner, this adjusted superimposition has the advantage of reducing the variation on the absorbed current, the torque waves, and the electromagnetic interference emitted.

The reduction in the ripple of the torque also enables the acoustic noise emitted by the motor to be reduced. The reduction of the variation in the absorbed current in turn enables the electrical noise produced by the motor to be reduced thus permitting smaller filters to be used. Furthermore, the switching points can be regulated inside the electronic control system, in order to optimise the performance of the motor. In the case of unipolar supply systems where it is not possible to have negative voltage values, the signal PULSE will no longer have a mean value of zero. Thus the integrator INT is provided with a positive integration terminal and a negative integration terminal, one or the other being selected depending on whether the signal TOGGLE is equal to 1 or 0.

In accordance with an alternative embodiment of the present invention, an encoder can be produced if the windings W1, W2, W3 are not energised. In this case the transistors T1, T2, T3 the comparators TH4, TH5 and the circuit L2 are not present. The position information is evidently provided by the control signal SW.

## Claims

1. A method for generating a control signal (SW) indicating the angular position of an inductor having permanent magnets relative to an armature comprising a plurality of circuit branches each of which comprises a respective winding or phase (W1, W2, W3), comprising the steps of:
- measuring the electromotive forces (E1, E2, E3) developed during the operation in the windings or phases (W1, W2, W3) of the armature;
- comparing the electromotive forces (E1, E2, E3) with a predetermined reference value (V-BAT) for generating a first synchronisation logic signal (TOGGLE); and
- generating a control signal (SW) indicating the angular position from the first synchronisation signal (TOGGLE), characterised in that the amplitude of the first synchronisation logic signal (TOGGLE) is multiplied by a signal (A) indicating the relative rotational speed (VEL) between the armature and the inductor, in order to generate a second synchronisation signal (PULSE) having an amplitude which varies in dependence on the speed (VEL), and the control signal (SW) is generated by integrating the second synchronisation signal (PULSE).

2. A method according to Claim 1, characterised in that it comprises the step of generating the said signal (A) indicative of the relative speed of rotation (VEL) between the armature and the inductor on the basis of the electromotive forces (E1, E2, E3).

3. A method according to Claim 1 or 2, characterised in that the electromotive forces (E1, E2, E3) are added together before being compared with the reference value (V-BAT).

4. A method according to Claim 1 or 2, characterised in that the electromotive forces (E1, E2, E3) are combined logically after being compared with the reference value (V-BAT).

5. A method according to Claim 1 or 2, characterised in that the control signal (SW) is a triangular wave signal with constant peak-to-peak amplitude and slopes which can be varied in dependence on the relative rotational speed (VEL).

6. A method according to Claim 1 or 2, characterised in that the control signal (SW) is a signal which is at least partially saw toothed with constant peak-to-peak amplitude and a slope which varies in dependence on the relative rotational speed (VEL).

7. A method according to any one of Claims 1 to 4, characterised in that the control signal (SW) is a digital signal.

8. A method according to any one of Claims 1 to 7, wherein said inductor and the armature are the rotor and the stator of a unipolar or bipolar brushless motor (1) comprising a plurality of circuit branches, in each of which an interruptor means (T1, T2, T3) is connected in series to a respective winding or phase (W1, W2, W3) of the motor (1), between the terminals (Vc, GND) of a d.c. voltage source, in parallel with the other circuit branches, and wherein the said control signal (SW) is indicative of the angular position of the rotor of the motor (1); the method further comprising the steps of:
- comparing the control signal (SW) with a first and a second reference signal (REF-ON, REF-OFF) and generating actuation signals (C1, C2, C3) which can control the passage of current in the circuit branches; and
- varying the reference signals (REF-ON, REF-OFF) in order to modify the starting and stopping moments for the conduction of current in the phases (W1, W2, W3) of the motor (1).

9. A device for detecting the angular position of a permanent magnet inductor relative to an armature comprising a plurality circuit branches, each comprising a winding or phase (W1, W2, W3), comprising:
- detector means (F1, F2, F3) for providing electrical signals indicating the electromotive forces (E1, E2, E3) induced in the windings or phases (W1, W2, W3);
- first comparator circuit means (TH1, TH2, TH3, L1) adapted to compare the signals provided by the detector means (F1, F2, F3) with a predetermined reference value (V-BAT) in order to generate a first synchronisation logic signal (TOGGLE) ; and
- signal processing circuit means (K, MUL, INT) adapted to generate a control signal (SW) indicative of the relative angular position from the first synchronisation logic signal (TOGGLE) ;
characterised in that the signal processing circuit means (K, MUL, INT) comprise a multiplier circuit (MUL) arranged to multiply the amplitude of the first synchronisation logic signal (TOGGLE) by a signal (A) indicating the relative speed of rotation (VEL) between the armature and the inductor so as to generate a second synchronisation signal (PULSE) having an amplitude which varies in dependence on the speed, and an integrator circuit (INT) connected to the output of the multiplier circuit (MUL).

10. A device according to Claim 9, characterised in that the signal processing circuit means (K, MUL, INT) comprise a circuit (K) adapted to generate a signal (A) indicative of the relative speed of rotation (VEL) between the armature and the inductor on the basis of the electromotive forces (E1, E2, E3).

11. A device according to Claim 9 or Claim 10, characterised in that it comprises adding means which can add up the electromotive forces (E1, E2, E3), interposed between the measuring means (F1, F2, F3) and the first comparator circuit means.

12. A device according to one of Claims 9 to 11, characterised in that the signal processing circuit means (K, MUL, INT) comprise a digital counting circuit connected to the output of the multiplier circuit (MUL) in order to generate the control signal (SW).

13. A device according to any one of Claims 9 to 11, wherein the said inductor and the armature are the rotor and the armature of a brushless motor (1), in which a transistor (T1, T2, T3) is connected in series to a respective winding or phase (W1, W2, W3) of each of the said plurality of circuit branches of the motor (1) between the terminals (Vc, GND) of a d.c. voltage source, in parallel with the other circuit branches, the device further comprising
second comparison circuit means (TH4, TH5; L2) adapted to compare the said control signal (SW) with a first and a second reference signal (REF-ON, REF-OFF) which are variable and adapted to generate actuation signals (C1, C2, C3) for use to control the passage of current in the said circuit branches.

14. A device according to Claim 13, characterised in that the second comparison circuit means comprise a first and a second threshold comparator (TH4, TH5) connected to the output of the signal processing circuit means (K, MUL, INT) and to respective reference signal generators adapted to generate first and second reference signals (REF-ON, REF-OFF) which are variable as a function of the speed (VEL) and of the current of the motor.

## Patentansprüche

1. Verfahren zum Erzeugen eines Steuersignals (SW), welches die Winkelposition eines Induktors mit Permanentmagneten in Bezug auf einen Anker mit einer Mehrzahl von Schaltungsverzweigungen anzeigt, von denen jede eine entsprechende Wicklung oder Phase (W1, W2, W3) aufweist, umfassend die Schritte des:
- Messens der elektromotorischen Kräfte (E1, E2, E3), welche während des Betriebs in den Wicklungen oder Phasen (W1, W2, W3) des Ankers entstehen;
- Vergleichens der elektromotorischen Kräfte (E1, E2, E3) mit einem vorbestimmten Referenzwert (V-BAT) zur Erzeugung eines ersten logischen Synchronisierungssignals (TOGGLE); und des
- Erzeugens eines Steuersignals (SW), welches die Winkelposition vom ersten Synchronisierungssignal (TOGGLE) anzeigt,
dadurch gekennzeichnet, daß die Amplitude des ersten logischen Synchronisierungssignals (TOGGLE) um ein die relative Umdrehungsgeschwindigkeit (VEL) zwischen dem Anker und dem Induktor anzeigendes Signal (A) vervielfacht wird, um ein zweites Synchronisicrungssignal (PULSE) mit einer Amplitude, welche in Abhängigkeit von der Geschwindigkeit (VEL) variiert, zu erzeugen, und daß das Steuersignal (SW) durch Integration des zweiten Synchronisierungssignals (PULSE) erzeugt wird.

2. Verfahren nach Anspruch 1, dadurch gekennzeichnet, daß es den Schritt des Erzeugens des Signals (A), welches, basierend auf den elektromotorischen Kräften (E1, E2, E3), die relative Umdrehungsgeschwindigkeit (VEL) zwischen dem Anker und dem Induktor anzeigt, umfaßt.

3. Verfahren nach Anspruch 1 oder 2, dadurch gekennzeichnet, daß die elektromotorischen Kräfte (El, E2, E3) vor Vergleichen mit dem Referenzwert (V-BAT) addiert werden.

4. Verfahren nach Anspruch 1 oder 2, dadurch gekennzeichnet, daß die elektromotorischen Kräfte (E1, E2, E3) nach Vergleichen mit dem Referenzwert (V-BAT) logisch verknüpft werden.

5. Verfahren nach Anspruch 1 oder 2, dadurch gekennzeichnet, daß das Steuersignal (SW) ein Dreiecksignal mit konstanter Doppelamplitude und Neigungen ist, welche in Abhängigkeit von der relativen Umdrehungsgeschwindigkeit (VEL) verändert werden können.

6. Verfahren nach Anspruch 1 oder 2, dadurch gekennzeichnet, daß das Steuersignal (SW) ein Signal ist, welches zumindest teilweise sägezahnförmig ist mit konstanter Doppelamplitude und einer Neigung, welche in Abhängigkeit von der relativen Umdrehungsgeschwindigkeit (VEL) variiert.

7. Verfahren nach einem der Ansprüche 1 bis 4, dadurch gekennzeichnet, daß das Steuersignal (SW) ein digitales Signal ist.

8. Verfahren nach einem der Ansprüche 1 bis 7, worin der Induktor und der Anker der Rotor und Stator eines einpoligen oder zweipoligen bürstenlosen Motors (1) sind, umfassend eine Mehrzahl von Schaltungsverzweigungen, von denen in jeder zwischen den Klemmen (Vc, GND) einer Gleichspannungsquelle parallel zu den anderen Schaltungsverzweigungen eine Untcrbrechervorrichtung (T1, T2, T3) mit einer entsprechenden Wicklung oder Phase (W1, W2, W3) des Motors (1) in Serie geschaltet ist, und worin das Steuersignal (SW) die Winkelposition des Rotors des Motors (1) anzeigt; wobei das Verfahren weiters die Schritte des:
- Vergleichens des Steuersignals (SW) mit einem ersten und einem zweiten Referenzsignal (REF-ON, REF-OFF) und des Erzeugens von Betätigungssignalen (C1, C2, C3), welche den Stromdurchgang in den Verzweigungsschaltungen steuern können; und des
- Variierens der Referenzsignale (REF-ON, REF-OFF) zwecks Modifizierens der Start- und Stoppzeitpunkte für die Stromleitung in den Phasen (W1, W2, W3) des Motors (1),
umfaßt.

9. Vorrichtung zur Ermittlung der Winkelposition eines Permanentmagnetinduktors in Bezug auf einen Anker mit einer Mehrzahl von Schaltungsverzweigungen, von denen jede eine Wicklung oder Phase (W1, W2, W3) aufweist, umfassend:
- eine Detektionsvorrichtung (F1, F2, F3) zur Schaffung von elektrischen Signalen, welche die in den Wicklungen oder Phasen (W1, W2, W3) induzierten elektromotorischen Kräfte (E1, E2, E3) anzeigen;
- eine erste Komparatorschaltungsvorrichtung (TH1, TH2, TH3, L1), welche ausgelegt ist zum Vergleichen der von der Detektionsvorrichtung (F1, F2, F3) geschaffenen Signale mit einem vorbestimmten Referenzwert (V-BAT) zwecks Erzeugens eines ersten logischen Synchronisierungssignals (TOGGLE); und
- eine Signalverarbeitungsschaltungsvorrichtung (K, MUL, INT), welche ausgelegt ist zur Erzeugung eines Steuersignals (SW), welches die relative Winkelposition vom ersten logischen Synchronisierungssignal (TOGGLE) anzeigt;
dadurch gekennzeichnet, daß die Signalverarbeitungsschaltungsvorrichtung (K, MUL, INT) eine zur Vervielfachung der Amplitude des ersten logischen Synchronisierungssignals (TOGGLE) um ein die relative Umdrehungsgeschwindigkeit (VEL) zwischen dem Anker und dem Induktor anzeigendes Signal (A) zwecks Erzeugens eines zweiten Synchronisierungssignals (PULSE) mit einer in Abhängigkeit von der Geschwindigkeit variierenden Amplitude angeordnete Verstärkerschaltung (MUL) und eine mit dem Ausgang der Verstärkerschaltung (MUL) verbundene Integratorschaltung (INT) umfaßt.

10. Vorrichtung nach Anspruch 9, dadurch gekennzeichnet, daß die Signalverarbeitungsschaltungsvorrichtung (K, MUL, INT) eine Schaltung (K) umfaßt, welche ausgelegt ist zur Erzeugung eines Signals (A), welches, basierend auf den elektromotorischen Kräften (E1, E2, E3), die relative Umdrehungsgeschwindigkeit (VEL) zwischen dem Anker und dem Induktor anzeigt.

11. Vorrichtung nach Anspruch 9 oder Anspruch 10, dadurch gekennzeichnet, daß sie eine die elektromotorischen Kräfte (E1, E2, E3) addierfähige Addiervorrichtung umfaßt, welche zwischen der Meßvorrichtung (F1, F2, F3) und der ersten Komparatorschaltungsvorrichtung geschaltet ist.

12. Vorrichtung nach einem der Ansprüche 9 bis 11, dadurch gekennzeichnet, daß die Signalverarbeitungsschaltungsvorrichtung (K, MUL, INT) zwecks Erzeugens des Steuersignals (SW) eine mit dem Ausgang der Verstärkerschaltung (MUL) verbundene digitale Zählschaltung umfaßt.

13. Vorrichtung nach einem der Ansprüche 9 bis 11, worin der Induktor und der Anker der Rotor und der Ankcr eines bürstenlosen Motors (1) sind, in welchem ein Transistor (T1, T2, T3) mit einer entsprechenden Wicklung oder Phasc (W1, W2, W3) von jeder der Mehrzahl von Schaltungsverzweigungen des Motors (1) zwischen den Klemmen (Vc, GND) einer Gleichspannungsquelle parallel zu den anderen Schaltungsverzweigungen in Serie geschaltet ist, wobei die Vorrichtung weiters eine zweite Vergleichschaltungsvorrichtung (TH4, TH5; L2) umfaßt, welche ausgelegt ist zum Vergleich des Steuersignals (SW) mit einem ersten und einem zweiten Refcrenzsignal (REF-ON, REF-OFF), welche variabel sind und Betätigungssignale (C1, C2, C3) zur Verwendung bei der Steuerung des Stromdurchgangs in den Schaltungsverzweigungen erzeugen können.

14. Vorrichtung nach Anspruch 13, dadurch gekennzeichnet, daß die zweite Verglcichschaltungsvorrichtung einen ersten und einen zweiten Schwellenkomparator (TH4, TH5) umfaßt, welcher mit dem Ausgang der Signalverarbeitungsschaltungsvorrichtung (K, MUL, INT) und entsprechenden Referenzsignalgeneratoren verbunden ist, welche zur Erzeugung von ersten und zweiten als Funktion der Geschwindigkeit (VEL) und des Stroms des Motors variablen Referenzsignalen (REF-ON, REF-OFF) ausgelegt sind.

## Revendications

1. Procédé de génération d'un signal de commande (SW) indiquant la position angulaire d'un inducteur comprenant des aimants permanents, par rapport à une armature comprenant une pluralité de branches de circuits, chacune d'entre elles comprenant un enroulement respectif ou phase (W1, W2, W3), comprenant les étapes consistant à:
- mesurer les forces électromotrices (E1, E2, E3) créées pendant le fonctionnement dans les enroulements ou phases (W1, W2, W3) de l'armature;
- comparer les forces électromotrices (E1, E2, E3) à une valeur de référence prédéterminée (V-BAT) pour générer un premier signal logique de synchronisation (TOGGLE); et
- générer un signal de commande (SW) indiquant la position angulaire par rapport au premier signal de synchronisation (TOGGLE),
caractérisé en ce que l'amplitude du premier signal logique de synchronisation (TOGGLE) est multipliée par un signal (A) indiquant la vitesse rotationnelle relative (VEL) entre l'armature et l'inducteur, pour générer un deuxième signal de synchronisation (PULSE) ayant une amplitude qui varie en fonction de la vitesse (VEL) et le signal de commande (SW) est généré en intégrant le deuxième signal de synchronisation (PULSE).

2. Procédé selon la revendication 1, caractérisé en ce qu'il comprend l'étape consistant à générer ledit signal (A) indiquant la vitesse de rotation relative (VEL) entre l'armature et l'inducteur, sur la base des forces électromotrices (E1, E2, E3).

3. Procédé selon la revendication 1 ou 2, caractérisé en ce que les forces électromotrices (E1, E2, E3) sont additionnées ensemble avant d'être comparées à la valeur de référence (V-BAT).

4. Procédé selon la revendication 1 ou 2, caractérisé en ce que les forces électromotrices (E1, E2, E3) sont combinées logiquement après avoir été comparées à la valeur de référence (V-BAT).

5. Procédé selon la revendication 1 ou 2, caractérisé en ce que le signal de commande (SW) est un signal d'onde triangulaire avec une amplitude crête à crête constante et des pentes pouvant varier en fonction de la vitesse rotationnelle relative (VEL).

6. Procédé selon la revendication 1 ou 2, caractérisé en ce que le signal de commande (SW) est un signal qui est, au moins partiellement, en dents de scie, avec une amplitude crête à crête constante et une pente qui varie en fonction de la vitesse rotationnelle relative (VEL).

7. Procédé selon l'une quelconque des revendications 1 à 4, caractérisé en ce que le signal de commande (SW) est un signal numérique.

8. Procédé selon l'une quelconque des revendications 1 à 7, dans lequel ledit inducteur et l'armature sont le rotor et le stator d'un moteur unipolaire ou bipolaire sans balai (1) comprenant une pluralité de branches de circuits, des moyens formant interrupteur (T1, T2, T3) étant connectés dans chacune d'entre elles en série avec un enroulement respectif ou phase (W1, W2, W3) du moteur (1), entre les bornes (Vc, GND) d'une source de tension en courant continu, en parallèle avec les autres branches de circuits et dans lequel ledit signal de commande (SW) indique la position angulaire du rotor du moteur (1); le procédé comprenant en outre les étapes consistant à:
- comparer le signal de commande (SW) à un premier et un deuxième signal de référence (REF-ON, REF-OFF) et générer des signaux d'actionnement (C1, C2, C3) pouvant commander le passage d'un courant dans les branches de circuits; et
- faire varier les signaux de référence (REF-ON, REF-OFF) pour modifier les instants de départ et d'arrêt pour la conduction du courant dans les phases (Wl, W2, W3) du moteur (1).

9. Dispositif de détection de la position angulaire d'un inducteur aimant permanent par rapport à une armature comprenant une pluralité de branches de circuits, chacune comprenant un enroulement ou phase (W1, W2, W3), comprenant :
- des moyens formant détecteurs (F1, F2, F3) destinés à fournir des signaux électriques indiquant les forces électromotrices (E1, E2, E3) induites dans les enroulements ou phases (W1, W2, W3);
- des premiers moyens formant circuits comparateurs (TH1, TH2, TH3, L1) prévus pour comparer les signaux fournis par les moyens formant détecteurs (F1, F2, F3) à une valeur de référence prédéterminée (V-BAT), pour générer un premier signal logique de synchronisation (TOGGLE); et
- des moyens formant circuit de traitement de signal (K, MUL, INT) prévus pour générer un signal de commande (SW) indiquant la position angulaire par rapport au premier signal logique de synchronisation (TOGGLE),
caractérisé en ce que les moyens formant circuit de traitement de signal (K, MUL, INT) comprennent un circuit multiplieur (MUL) prévu pour multiplier l'amplitude du premier signal logique de synchronisation (TOGGLE) par un signal (A) indiquant la vitesse de rotation relative (VEL) entre l'armature et l'inducteur, de façon à générer un deuxième signal de synchronisation (PULSE) ayant une amplitude qui varie en fonction de la vitesse et un circuit intégrateur (INT) connecté à la sortie du circuit multiplieur (MUL).

10. Dispositif selon la revendication 9, caractérisé en ce que les moyens formant circuit de traitement de signal (K, MUL, INT) comprennent un circuit (K) prévu pour générer un signal (A) indiquant la vitesse de rotation relative (VEL) entre l'armature et l'inducteur, sur la base des forces électromotrices (E1, E2, E3).

11. Dispositif selon la revendication 9 ou la revendication 10, caractérisé en ce qu'il comprend des moyens d'addition pouvant additionner les forces électromotrices (E1, E2, E3), intercalés entre les moyens de mesure (F1, F2, F3) et les premiers moyens formant circuit comparateur.

12. Dispositif selon l'une quelconque des revendications 9 à 11, caractérisé en ce que les moyens formant circuit de traitement de signal (K, MUL, INT) comprennent un circuit de comptage numérique connecté à la sortie du circuit multiplieur (MUL), destiné à générer le signal de commande (SW).

13. Dispositif selon l'une quelconque des revendications 9 à 11, dans lequel ledit inducteur et l'armature sont le rotor et l'armature d'un moteur sans balai (1) dans lequel un transistor (T1, T2, T3) est connecté en série avec un enroulement respectif ou phase (W1, W2, W3) de chaque branche de ladite pluralité de branches de circuits du moteur (1), entre les bornes (Vc, GND) d'une source de tension en courant continu, en parallèle avec les autres branches de circuits, le dispositif comprenant en outre des deuxièmes moyens formant circuit de comparaison (TH4, TH5; L2) prévus pour comparer ledit signal de commande (SW) à un premier et un deuxième signal de référence (REF-ON, REF-OFF) qui sont variables et sont prévus pour générer des signaux d'actionnement (C1, C2, C3) destinés à être utilisés pour commander le passage d'un courant dans lesdites branches de circuits.

14. Dispositif selon la revendication 13, caractérisé en ce que les deuxièmes moyens formant circuit de comparaison comprennent un premier et un deuxième comparateurs de seuil (TH4, TH5) connectés à la sortie des moyens formant circuit de traitement de signal (K, MUL, INT) et aux générateurs de signaux de référence respectifs, prévus pour générer un premier et un deuxième signal de référence (REF-ON, REF-OFF) qui sont variables en fonction de la vitesse (VEL) et du courant du moteur.
